# EUROPÄISCHE PATENTSCHRIFT

(11) **EP 3 792 207 B1**
(45) Veröffentlichungstag und Bekanntmachung des Hinweises auf die Patenterteilung: **24.04.2024**
(21) Anmeldenummer: 20192201.0
(22) Anmeldetag: 21.08.2020
(51) Int. Cl.: B65G 65/46, B65D 88/66, B65G 33/10, B65D 88/26

(54) **DOSIERVORRICHTUNG**
METERING DEVICE
DISPOSITIF DE DOSAGE

(30) Priorität: 12.09.2019 DE 102019124562
(43) Veröffentlichungstag der Anmeldung: 17.03.2021
(73) Patentinhaber: VFill GmbH, 40489 Düsseldorf (DE)
(72) Erfinder: Horst, Vohwinkel, 40489 Düsseldorf (DE)
(74) Vertreter: Cohausz & Florack

(56) Entgegenhaltungen:
- EP-A1- 0 654 422
- CN-A- 109 552 902
- DE-A1-102008 061 339
- DE-T2- 69 128 146
- US-A1- 2017 334 655

## Beschreibung

### Gebiet

Der Gegenstand betrifft eine Dosiervorrichtung zum präzisen Zuführen oder Fördern von Schüttgut aus einem Behältnis. Der Gegenstand betrifft ferner ein System umfassend mehrere gegenständliche Dosiervorrichtungen.

### Hintergrund

Vertikale Schneckenabfüllmaschinen sind in der Lebensmittel- und chemischen Industrie bekannt. Dabei besteht die Maschine aus einem rotationssymmetrischen Trichter, der das zu dosierende Schüttgut enthält, und einer mittig im Trichter angeordneten vertikal verlaufenden Schnecke. Durch die Drehbewegung der Schnecke wird das Schüttgut nach unten durch ein Rohr gefördert, in dem sich die Dosiergänge der Schnecke befinden. In dieser Zone findet auch eine präzise Dosierung des Schüttguts statt. Die Abfüllmenge ergibt sich aus Gangvolumen mal Anzahl der Schneckenumdrehungen. Im Innenraum des Trichters befindet sich ein umlaufendes Rührwerk, das Produktbrücken zerstören soll, so dass das abzufüllende Produkt in Form des Schüttguts gleichmäßig der Schnecke zuführbar ist.

Rührwerke haben allerdings den Nachteil, dass empfindliche Produkte, wie zum Beispiel Instantkaffee durch die Rotation zerstört werden und es zu einer erhöhten Bruchrate kommt.

Um Produktmischungen abfüllen zu können, bei denen Teile der Produktmischung jeweils in einer Schneckenabfüllmaschine bevorratet sind, muss ein Produktbehälter aufwendig zwischen den jeweiligen Schneckenabfüllmaschinen bewegt werden, oder aber eine fertig gemischte Produktmischung muss mittels der Schneckenabfüllmaschine abgefüllt werden. Bekannte Abfüllmaschinen eignen sich durchweg nur für die Zuführung eines Schüttguts. Falls das Schüttgut aus mehreren Komponenten besteht, muss das Schüttgut in einem vorgelagerten Arbeitsschritt im gewünschten Verhältnis gemischt werden. Bei dem Bevorraten einer fertig gemischten Produktmischung ist es ferner nachteilig, dass es z. B. durch das Rührwerk zu einer Entmischung der Produktmischung kommen kann, so dass z. B. ein gewünschtes Mischverhältnis beim Abfüllen nicht immer gewährleistet werden kann. Derartige Rührwerke benötigen ferner aufgrund der direkten Einwirkung auf das abzufüllende Produkt eine hohe Antriebsleistung.

Ferner sind bei kontinuierlich arbeitenden Schneckenzuführmaschinen horizontal verlaufende Schnecken bekannt, die sich durch die hohe Drehgeschwindigkeit der Schnecke nicht mehr richtig füllen und bei niedrigen Drehzahlen einen pulsierenden Produktabwurf erzeugen. Dies schränkt den Einsatz derartiger Maschinen ein, da deren Schnecken mit max. etwa 200 U/min betrieben werden können.

Die US 2017/334655 A1 offenbart einen Beschicker für Schüttgut mit einem drehbaren Behälter. Der Behälter hat einen offenen Boden und eine offene Oberseite und ist derart geneigt, dass eine Seite des Behälters im Wesentlichen vertikal ist. Innerhalb des Behälters befindet sich eine rotierende Schnecke mit einer vertikal ausgerichteten, freiliegenden schraubenförmigen Rippe. An der Innenfläche des Behälters sind in radialem Abstand Längsrippen befestigt. Material wird in die offene Oberseite des rotierenden Behälters eingefüllt, wodurch das Material zum Boden des Behälters geworfen wird und ständig mit der rotierenden Schnecke in Kontakt kommt. Die Schnecke befördert das Material dann durch einen offenen Boden des Behälters. Die Rippen greifen in das Material im Behälter ein und verbessern so das Taumeln und die Zuführung. Die US 2017/334655 A1 offenbart somit den Oberbegriff des Anspruchs 1.

### Allgemeine Beschreibung einiger beispielhafter Ausführungsformen

Davon ausgehend liegt der vorliegenden Erfindung die Aufgabe zugrunde, eine Vorrichtung bereitzustellen, die die bekannten Nachteile bei der Abfüllung von Produktmischungen vermindert bzw. beseitigt, insbesondere sowohl für das Abfüllen von Schüttgütern als auch für einen kontinuierlichen Betrieb von volumetrisch als auch gravimetrisch arbeitenden Schneckenzuführmaschinen eine Verbesserung der Funktion ermöglicht, und ferner Zeit spart bei einer Produktumstellung.
- Gemäß der Erfindung wird eine Dosiervorrichtung beschrieben, die Dosiervorrichtung mit den Merkmalen nach dem Anspruch 1.

Gemäß einem Aspekt der Erfindung wird ein System beschrieben, das System umfassend:
- mehrere (z. B. mindestens zwei) Dosiervorrichtungen nach der Erfindung.

Im Folgenden werden beispielhafte Merkmale und beispielhafte Ausgestaltungen nach allen Aspekten detaillierter beschrieben:
Die gegenständliche Dosiervorrichtung ist beispielsweise eine Schneckenzuführmaschine. Die gegenständliche Dosiervorrichtung vermeidet insbesondere die Nachteile von bekannten Schneckenzuführmaschinen.

Die gegenständliche Dosiervorrichtung bzw. das gegenständliche System zum präzisen Zuführen von Schüttgütern werden beispielsweise zum Abfüllen von pulverartigen Produkten (als Schüttgut) verwendet. Bei derartigen Produkten kommt es insbesondere darauf an, dass jede Verpackungseinheit eine genau vorbestimmte Gewichtsmenge des Schüttguts enthält.

Dem Gegenstand liegt die Erkenntnis zugrunde, dass eine präzise Dosierung Schüttgut insbesondere dann ermöglicht ist, wenn ein elastisches, sich nach unten verjüngendes, - daher asymmetrisches - Behältnis verwendet wird. An dem unteren Ende des Behältnisses weist das Behältnis einen Verbindungsansatz auf, an dem beispielsweise ein Rohr anschließbar ist. Der Verbindungsansatz ist mit der Auslassöffnung des Behältnisses beispielsweise verbunden, die außerhalb der Mitte des Behältnisses liegt, im Gegensatz zu bekannten rotationssymmetrischen Behältnissen. Die vertikal verlaufende Schnecke erstreckt sich beispielsweise gegenständlich in den Verbindungsansatz oder aber sogar über diesen hinaus in ein Rohr, falls dies mit der Dosiervorrichtung verbunden ist. Das Behältnis weist beispielsweise eine Fixierung auf, so dass dieses in einer Position verankert ist während mechanische auf den zumindest elastisch ausgebildeten Teil des Behältnisses einwirken.

Die Schnecke ist gegenständlich ein Förderelement der Dosiervorrichtung. Ein derartiges Förderelement ist beispielsweise als eine sogenannte Einfachschnecke oder eine Doppelschnecken ausgebildet. Eine derartige Einfachschnecke umfasst eine Welle, um die ein schneckenförmig gewundener Gang gewedelt ist. Im Sinne des vorliegenden Gegenstands umfasst die Schnecke alternativ mehrere (z. B. mindestens zwei) schneckenförmig gewundene Gänge, die um die von der Schnecke umfasste Welle gewedelt sind.

Bei einer Einfachschnecke als Schnecke der gegenständlichen Dosiervorrichtung weist die Schnecke beispielsweise einen Durchmesser auf, der im Bereich des oberen Behältnisses größer ist und sich mit der Verjüngung des Behältnisses ebenfalls verringert. Beispielsweise verjüngt sich der Schneckendurchmesser konisch zu der Auslassöffnung des Behältnisses hin. Die Schnecke umfasst beispielsweise eine Strebe, die an einer Schneckenflanke im oberen Bereich angeordnet ist, so dass abzufüllendes Schüttgut nahezu ausschließlich über die gesamte Länge der Schnecke gefördert wird, und z. B. nicht seitlich der Schnecke zugeführt ist bzw. werden kann.

Die Schnecke kann beispielsweise einen oder mehrere Wurfteller umfassen oder aufweisen. Insbesondere freifließende Schüttgüter benötigen beispielsweise bei der Erstbefüllung mitunter besondere Maßnahmen. Der eine oder die mehreren Wurfteller bilden beispielsweise ein Abschlusssystem aus, das z. B. am unteren Ende der Schnecke (zu der Auslassöffnung des Behältnisses hin oder aus der Auslassöffnung hinausragend) angeordnet sind.

Doppelschnecken als Schnecke der gegenständlichen Dosiervorrichtung umfassen zwei Wellen, um die jeweils ein gewundener Gang gewedelt ist. Die jeweiligen Gänge der Wellen greifen ineinander. Doppelschnecken sind beispielsweise als Doppelkonkavschnecken oder als Doppelvollblattschnecken ausgebildet.

Bei derartigen Doppelkonkavschnecken ist beispielsweise ein unkontrolliertes Durchlaufen von dem Schüttgut durch die Doppelkonkav-Schnecken verhindert bzw. reduziert. Bei der Verwendung einer Doppelkonkavschnecke werden beispielsweise Wurfteller nicht benötigt.

Die gegenständliche Dosiervorrichtung kann beispielsweise in Abhängigkeit der Örtlichkeit, an der die Dosiervorrichtung installiert ist, auf eine Bühne gestellt oder alternativ, von einer Bühne abgehangen sein.

Die Dosiervorrichtung umfasst ferner:
- ein oder mehrere Aktivierungsmittel, die derart (z. B. von außerhalb des Behältnisses)auf das Behältnis mechanisch einwirken, dass das Behältnis zumindest teilweise elastisch verformt ist, so dass das Schüttgut innerhalb des Behältnisses aktivierbar ist.

Das eine oder die mehreren Aktivierungsmittel sind paddelförmig ausgebildet, wobei das eine oder die mehreren Aktivierungsmittel auf das Behältnis von außen mechanisch einwirken.

In einer beispielhaften Ausgestaltung nach allen Aspekten sind das eine oder die mehreren Aktivierungsmittel ferner als Schwingungserreger ausgebildet, die das Behältnis in Schwingung versetzen, so dass das Schüttgut aktiviert ist.

Das eine oder die mehreren Aktivierungsmittel ermöglichen beispielsweise einen Aktivierungsmechanismus, der an mindestens einer Stelle des Behältnisses eine Verformung erzeugt. Eine derartige Verformung bewirkt, dass das zu dosierende Schüttgut der vertikal verlaufenden Schnecke zugeführt wird. Dies ist im Sinne des vorliegenden Gegenstands auch als Aktivierung des Schüttguts bezeichnet.

Das eine oder die mehreren Aktivierungsmittel sind beispielsweise seitlich an dem Behältnis und außerhalb eines Produktraums, in dem das abzufüllende Schüttgut bevorratbar ist, angeordnet. Die Aktivierungsmittel sind beispielsweise durch einen eigenen Motor oder durch einen Schwingungserreger angetrieben. Durch eine individuelle Ansteuerung des Motors der Schnecke und/oder des Motors des ein oder der mehreren Aktivierungsmittel ist/sind eine Optimierung und Anpassung der Dosiervorrichtung z. B. an Fließeigenschaften des Schüttguts ermöglicht. Die Ansteuerung der Schnecke und/oder des einen oder der mehreren Aktivierungsmittel bzw. der jeweiligen Motoren, die diese antreiben, erfolgt beispielsweise mittels einer von der Dosiervorrichtung optional umfassten Steuer- und/oder Regeleinrichtung.

Ein derartiger Motor arbeitet beispielsweise stufenlos. Ein derartiger Motor weist beispielsweise einen großen Verstellbereich auf, z. B. im Verhältnis 1:100, so dass die Schnecke stark variabel in ihrer Umdrehungsgeschwindigkeit ist. Dies ermöglicht es beispielsweise ferner, dass bei Produktumstellungen und damit verbundenem sich voneinander unterscheidendem, abzufüllendem Schüttgut ein Schneckenwechsel mitunter entfallen kann.

Ein vorstehend angeführter Motor der Schnecke treibt diese beispielsweise über eine Kupplung an, so dass die Schnecke in einer Drehbewegung angetrieben ist. Die Schnecke weist beispielsweise eine Antriebswelle zum Antreiben auf. Die Antriebswelle ist beispielsweise in einer Lagerglocke gelagert. Mittels eines Schnellverschlusses sind sämtliche Teile des Antriebs der Schnecke und/oder die Schnecke von der Dosiervorrichtung lösbar. Beispielsweise kann der Motor der Schnecke mit einer Kupplungshälfte separat abgebaut werden, um nur ein nicht-limitierendes Beispiel zu nennen.

Ein Motor zum Antreiben des einen oder der mehreren Aktivierungsmittel umfasst beispielsweise eine oder mehrere Exzenterscheiben, an denen beispielsweise ferner jeweils ein Gelenkkopf mit einer Kurbelstange operativ verbunden ist. Derart können beispielsweise separate Aktivierungsmittel, wobei jeweils ein oder mehrere Aktivierungsmittel für jede der zwei schräg verlaufenden Seitenwände des Behältnisses vorgesehen sind, mit einem einzigen Motor angetrieben sein. Dies erlaubt ferner ein asynchrones oder synchrones Antreiben der Aktivierungsmittel für die zwei schräg verlaufenden Seitenwände des Behältnisses.

Um beispielsweise Produktentmischungen von als Schüttgut in der Dosiervorrichtung bevorrateten Produktmischungen zu reduzieren bzw. zu vermeiden, erfolgt mittels des einen oder der mehreren Aktivierungsmittel eine Verformung des Behältnisses. Insbesondere erfolgt mittels der Aktivierungsmittel eine Verformung von einer oder mehreren (z. B. zwei) schräg verlaufenden Seitenwänden des Behältnisses. Eine Aktivierung des Schüttguts ist ferner schonender für das Schüttgut, als beispielsweise direkt auf das Schüttgut einzuwirken, um nur ein Beispiel zu nennen. Die zumindest teilweise elastische Verformung des Behältnisses bewirkt beispielsweise, dass Produktbrücken innerhalb der Schnecke bei der Dosierung zerstört bzw. vermieden werden. Ferner bewirkt die zumindest teilweise elastische Verformung des Behältnisses beispielsweise, dass das Schüttgut der Schnecke zugeführt wird. Auch hierdurch mitunter entstehende Produktbrücken sind gegenständlich vermeidbar.

Um mitunter schlechtfließende Schüttgüter zum Fließen anzuregen, erfolgt ein Zuführen des Schüttguts in die Schnecke beispielsweise nach dem Prinzip der externen Agitation. Das eine oder die mehreren Aktivierungsmittel, beispielsweise in Form von auf die äußeren Wände des zumindest teilweise elastisch verformbaren Behältnisses mechanisch einwirkende Paddel, aktivieren hierbei das Schüttgut. Die Aktivierungsmittel erzeugen Verformungen des Behältnisses, beispielsweise alternierend im oberen Bereich und unteren Bereich des Behältnisses. Für den Fall, dass das eine oder die mehreren Aktivierungsmittel auf die zwei schräg verlaufenden Seitenwände einwirken, verformen sich diese jeweils in deren oberen und unteren Bereich mechanisch. Es hat sich herausgestellt, dass eine besonders gute Dosierkonstanz erzielbar ist, wenn die zwei schräg verlaufenden Seitenwände des Behältnisses durch das eine oder die mehreren Aktivierungsmittel aktiviert werden, insbesondere wenn das Behältnis wechselseitig im oberen und unteren Bereich verformt wird.

Die Frequenz und Intensität, sowie die Sequenz der Verformung mittels des einen oder der mehreren Aktivierungsmittel ist beispielsweise steuer- und/oder regelbar, z. B. mittels einer optional von der Dosiervorrichtung umfassten Steuer- und/oder Regeleinrichtung. Insbesondere Paddel sind beispielsweise besonders effektiv zur Aktivierung von in dem Behältnis bevorratetem Schüttgut.

Das eine oder die mehreren Aktivierungsmittel sind ferner energieeffizient gegenüber bekannten Rührwerken, da diese nicht direkt bzw. unmittelbar auf das Schüttgut einwirken müssen.

Das Behältnis weist eine im Wesentlichen rechteckige Grundform auf, wobei sich das Behältnis zu einer Ecke der Grundform hin verjüngt.

In einer beispielhaften Ausgestaltung nach allen Aspekten sind mindestens zwei Seitenwände des Behältnisses im Wesentlichen vertikal verlaufend und einen Winkel zueinander ausbildend angeordnet, und wobei mindestens zwei weitere, und zu den mindestens zwei vertikal verlaufenden Seitenwänden schräg verlaufende Seitenwände von dem Behältnis umfasst sind, so dass eine trichterartige Form von dem Behältnis ausgebildet ist, wobei die untere Ecke des Behältnisses im Bereich des ausgebildeten Winkels angeordnet ist.

Dass die untere Ecke im Bereich des ausgebildeten Winkels angeordnet ist wird gegenständlich insbesondere derart verstanden, dass der zwischen den mindestens zwei Seitenwänden des Behältnisses, die im Wesentlichen vertikal verlaufen, im Innenraum von dem Behältnis ausgebildete Winkel zwischen 45 Grad und 170 Grad, bevorzugt zwischen 75 Grad und 120 Grad beträgt. Dies umfasst ferner die Möglichkeit, dass die mindestens zwei Seitenwände des Behältnisses, die im Wesentlichen vertikal verlaufen, in einem Übergangsbereich zueinander im Innenraum des Behältnisses eine Rundung aufweisen, wobei die Rundung auch als untere Ecke im Sinne des vorliegenden Gegenstands aufgefasst wird.

Der Winkel, der zwischen den mindestens zwei Seitenwänden des Behältnisses, die im Wesentlichen vertikal verlaufen, ist insbesondere ein rechter Winkel. Der ausgebildete Winkel weicht beispielsweise von einem rechtem Winkel ab für den Fall, dass z. B. eine Mehrfachanordnung von mehreren gegenständlichen Dosiervorrichtungen (z. B. umfasst von einem gegenständlichen System) diese vorteilhaft ausgestaltet. Beispielsweise für den Fall, dass fünf oder mehr gegenständliche Dosiervorrichtungen um eine zentrale (Produkt-) Aufnahmestelle bzw. Sammelstelle herum anzuordnen sind, kann ein jeweiliger Winkel zwischen den mindestens zwei Seitenwänden des Behältnisses, die im Wesentlichen vertikal verlaufen, derart bemessen sein, dass die fünf oder mehr gegenständlichen Dosiervorrichtungen kreisförmig um die zentrale (Produkt-) Aufnahmestelle bzw. Sammelstelle herum anordenbar bzw. angeordnet sind. Beispielsweise sind in bei einer Ausgestaltung eines gegenständlichen Systems fünf oder mehr gegenständliche Dosiervorrichtungen kreisförmig um die zentrale Aufnahmestelle herum und zueinander jeweils den gleichen Abstand aufweisend angeordnet.

Dies erlaubt eine Geometrie des Behältnisses, bei der zwei im Wesentlichen gerade, vertikale Seitenwände, und zwei um etwa 45 Grad dazu geneigte Seitenwände die Außenwände des Behältnisses bilden, so dass eine Art Trichter von dem Behältnis ausgebildet ist. Hierdurch kann eine vertikale (Förder-) Schnecke eingesetzt werden, die nicht in der Mitte des Behältnisses, wie dies bei rotationssymmetrischen Behältnissen der Fall ist, platziert werden muss. Die Schnecke ist hierdurch insbesondere in einer Ecke des Behältnisses anordenbar bzw. angeordnet

In einer beispielhaften Ausgestaltung nach allen Aspekten bilden zumindest die zwei schräg verlaufenden Seitenwände den elastisch verformbaren Teil des Behältnisses aus.

In einer beispielhaften Ausgestaltung nach allen Aspekten weist das Behältnis an seinem oberen Ende zumindest eine verschließbare Öffnung zur Befüllung des Behältnisses mit dem Schüttgut auf.

Das Behältnis besteht oder umfasst beispielsweise ein elastisches Material. Die Dosiervorrichtung umfasst beispielsweise ein Gehäuse, wobei das Behältnis beispielsweise in das Gehäuse eingesetzt ist. Durch einen die Öffnung des Behältnisses, die sich beispielsweise über den gesamten oberen Bereich des Behältnisses erstreckt, verschließenden Deckel kann ferner das Behältnis in dem Gehäuse fixiert sein.

Der Deckel umfasst beispielsweise ein Filter. Alternativ oder zusätzlich ist auf dem Deckel ein Filter angeordnet. Der Filter gewährleistet beispielsweise die Belüftung und Entlüftung des Behältnisses.

Die Öffnung des Behältnisses ist insbesondere derart bemessen, dass die Schnecke zu deren Austausch über die Öffnung des Behältnisses aus diesem entfernt und anschließend dieses z. B. gereinigt oder eine baugleiche oder ähnliche Schnecke wieder einsetzbar ist. Dies ermöglicht eine leichte Produktumstellung von abzufüllendem Schüttgut. Ferner erleichtert dies ein einfaches Austauschen von Bauteilen der Dosiervorrichtung, soweit erforderlich. Wenn beispielsweise Bauteile der gegenständlichen Dosiervorrichtung wie Schnecke, Behältnis und/oder Deckel leicht zu demontieren sind, verkürzt sich z. B. die Reinigungs- und/oder Wartungszeit der Dosiervorrichtung.

Alternativ oder zusätzlich weist der Deckel eine weitere Öffnung auf. Diese weitere Öffnung ist beispielsweise so groß gewählt, dass die Schnecke zur Montage bzw. Demontage durch die weitere Öffnung des Deckels durch diesen steckbar ist.

Über die Öffnung ist beispielsweise abzufüllendes Schüttgut in das Behältnis eingebbar. Beispielsweise kann ein Aufsatzbehälter mit der Öffnung des Behältnisses der gegenständlichen Vorrichtung verbindbar sein. Dies ermöglicht beispielsweise ein kontinuierliches (gravimetrisches) Dosieren von Schüttgütern, z. B. nach dem Prinzip der Gewichtsabnahme.

Das Behältnis der gegenständlichen Vorrichtung kann beispielsweise über eine Querschnecke befüllt bzw. nachgefüllt werden, wobei der Nachfüllzyklus beispielsweise durch den Füllstand des Behältnisses initiierbar ist. Die Steuerung und/oder Regelung erfolgt beispielsweise von der entsprechenden Steuer- und/oder Regeleinrichtung der Dosiervorrichtung, sofern diese von der Dosiervorrichtung umfasst ist. Ein Auslauf der Querschnecke ist beispielsweise mit der (Einlass-) Öffnung des Behältnisses - z. B. ein Einlaufstutzen - verbunden. Die Anbindung zwischen dem Auslauf der Querschnecke und der Öffnung des Behältnisses ist beispielsweise mittels eines flexiblen (staubfreien) Kompensators angebunden.

In einer beispielhaften Ausgestaltung nach allen Aspekten ist die Schnecke mit einer variablen Umdrehungszahl von 0 U/min bis zu etwa 600 U/min betreibbar ist, so dass eine Förderleistung der Schnecke veränderbar.

Die Schnecke ist beispielsweise von einem Antriebsmotor angetrieben. Der Antriebsmotor ist beispielsweise oben an dem Gehäuse der Dosiervorrichtung - sofern von dieser umfasst - angeordnet.

In einer beispielhaften Ausgestaltung nach allen Aspekten weist die Schnecke im oberen und der Auslassöffnung des Behältnisses abgewandten Bereich der Schnecke einen größeren Durchmesser auf als in dem der Auslassöffnung des Behältnisses zugewandten Bereich der Schnecke.

In einer beispielhaften Ausgestaltung nach allen Aspekten weist die ausgebildete Ecke an einer inneren Wandung der zwei vertikal verlaufenden Seitenwände einen Eckradius auf, der einem Radius der Schnecke, der im Bereich der Auslassöffnung des Behältnisses angeordnet ist, im Wesentlichen entspricht.

Die Innenseiten der zwei vertikal verlaufenden Seitenwände des Behältnisses weisen beispielsweise einen Eckradius auf, dessen Abmessung derart ausgestaltet ist, dass ein Verbindungsansatz vom Behältnis zur Auslassöffnung bzw. zu einem Rohr der Auslassöffnung formschlüssig ausgestaltet ist. Derart entsteht beispielsweise am Übergang zur Auslassöffnung (z. B. ein Rohr) kein Absatz von Schüttgut.

Eine weitere Ausgestaltung nach allen Aspekten sieht vor, dass die Dosiervorrichtung kipp- und/oder schwenkbar ausgebildet ist. Die Dosiervorrichtung ist hierzu beispielsweise über ein Scharnier mit einer (Zwischen-) Platte verbunden. Beispielsweise zum Reinigen und/oder Warten und/oder zur besseren Zugänglichkeit der oberen Öffnung des Behältnisses der Dosiervorrichtung ist die Dosiervorrichtung kipp- und/oder schwenkbar, insbesondere derart, dass die obere Öffnung mittels einer Kipp- und/oder Schwenkbewegung seitlich zugänglich ist.

In einer beispielhaften Ausgestaltung nach dem zweiten Aspekt sind die mehreren Dosiervorrichtungen (umfasst von dem gegenständlichen System) derart zueinander angeordnet, dass deren jeweilige Auslassöffnungen um eine zentrale Aufnahmestelle herum angeordnet sind.

Das gegenständliche System ermöglicht es, dass mehrere gegenständliche Dosiervorrichtungen um eine zentrale (Produkt-) Aufnahmestelle herum anordenbar sind. Jede gegenständliche Vorrichtung steuert und/oder regelt beispielsweise die benötigte Menge an Schüttgut bei, um ein Produkt mit einem definierten Mischungsverhältnis erhalten zu können. Das definierte Mischungsverhältnis ist durchgängig während des Dosierens mit dem gegenständlichen System gewährleistet. Schwankungen des Mischverhältnisses werden durch den Einsatz der gegenständlichen Dosiervorrichtung hingegen vermieden. Durch das Anordnen der Auslassöffnung einer jeweiligen Dosiervorrichtung ist eine Geometrie der gegenständlichen Dosiervorrichtung realisiert, die es erlaubt, die jeweiligen Auslassöffnungen eng beieinander liegend anzuordnen.

Die asymmetrische Geometrie der gegenständlichen Dosiervorrichtungen ermöglicht eine besonders raumsparende Anordnung der jeweiligen Dosiervorrichtungen um eine flächenmäßig kleine zentrale Aufnahmestelle. Insbesondere umfasst das gegenständliche System zwei, drei, oder vier gegenständliche Dosiervorrichtungen. Die daraus sich ermöglichende Geometrie erlaubt weitgehende Kombinationen einer Gesamtanlage, bei der in mehreren Schritten Schüttgut in ein Endprodukt abfüllbar ist. Der Einsatz von einer derartigen Kombination von gegenständlichen Dosiervorrichtungen erlaubt es ferner, deren jeweils an einer Ecke angeordnete Auslassöffnungen besonders nahe zueinander liegend um die zentrale Aufnahmestelle anzuordnen. Es versteht sich, dass andere Konfigurationen, z. B. mit fünf oder mehr gegenständlichen Dosiervorrichtungen möglich sind. Beispielsweise lassen sich mehrere Gruppen umfassend zwei, drei, vier, fünf oder mehr gegenständliche Dosiervorrichtungen über jeweilige Produkteinläufe eines Extruders anordnen, um z. B. aufwendige Produktmischungen abfüllen zu können.

Insbesondere Produktbrücken bei Produktmischungen können wirksam bei einer Geometrie umfassend vier gegenständliche Dosiervorrichtungen vermieden werden. Dabei weist jedes Behältnis der gegenständlichen Dosiervorrichtungen beispielsweise zwei vertikal verlaufende Seitenwände auf, in deren jeweils ausgebildeter inneren Ecke die Schnecke vertikal verlaufend angeordnet ist. Die dann den zwei vertikal verlaufenden Seitenwänden gegenüber liegenden Seitenwände (z. B. bei einer rechteckigen Grundform des Behältnisses der Dosiervorrichtung) verjüngen sich nach unten und verlaufen im Wesentlichen schräg. Ein Gewölbe von abzufüllendem Schüttgut kann sich derart innerhalb des Behältnisses hierdurch aufgrund eines fehlenden Gegenlagers gar nicht erst ausbilden.

An einem oberen Rand der zentralen Aufnahmestelle ist beispielsweise ein flexibler Kompensator angeordnet. Die Auslassöffnung der Dosiervorrichtung bzw. der jeweiligen Dosiervorrichtung ist beispielsweise mittels eines Rohrs mit einer vorgesehenen Öffnung des Kompensators verbunden, so dass eine staubfreie Anordnung realisiert ist. Die zentrale Aufnahmestelle ist ferner beispielsweise mit Einbauten versehen, deren Aufgabe es ist, die gleichzeitig durchfließenden Schüttgüter der einzelnen Komponenten, die in jeweils einer gegenständlichen Dosiervorrichtung zum Abfüllen bevorratet sind, zu mischen.

In einer beispielhaften Ausgestaltung nach dem zweiten Aspekt umfasst das System ferner:
- mindestens eine Wägezelle zur Erfassung eines Gewichtssignals, wobei die jeweiligen Schnecken der mehreren Dosiervorrichtungen zumindest teilweise basierend auf dem erfassten Gewichtssignal steuer- und/oder regelbar sind.

Um eine gewichtsgenaue Zuführung auch bei stark schwankendem Schüttgewicht sicherzustellen, ist das System, oder zumindest eine von dem System umfasste Dosiervorrichtung auf einer Wägezelle angeordnet. Es versteht sich, dass jede oder nur ein Teil der von dem System umfassten Dosiervorrichtungen auf einer separaten Wägezelle angeordnet sein kann.

Die Wägezelle erfasst (z. B. misst) beispielsweise ein Gewichtssignal. Das Gewichtssignal der Wägezelle ist beispielsweise zum Zwecke einer gravimetrischen Zuführung des Schüttguts mittel eine Steuer- und/oder Regeleinrichtung verbindbar, so dass die Steuer- und/oder Regeleinrichtung beispielsweise eine Steuerung und/oder Regelung der Umdrehungsgeschwindigkeit einer jeweiligen Schnecke von der (den) Dosiervorrichtung(en) durchführt.

Dies ermöglicht eine gewichtsgenaue Zuführung des in dem Behältnis bevorrateten Schüttguts. Dies ist ferner unabhängig von Schüttgewichtsschwankungen des abzufüllenden Schüttguts ermöglicht.

Das erfasste Gewichtssignal der Wägezelle kann beispielsweise für weitere Zwecke verarbeitet werden, wie z. B. zur Füllstandsbestimmung bzw. -messung, einer Material-Verbrauchserfassung, oder dergleichen, um nur einige nicht-limitierende Beispiele zu nennen.

In einer beispielhaften Ausgestaltung nach dem zweiten Aspekt ist die zentrale Aufnahmestelle als Durchlaufmischer ausgebildet, so dass eine Produktmischung (während des Abfüllens) ermöglicht ist.

Wird beispielsweise eine Produktschichtung gewünscht, kann beispielsweise jede Komponente der Produktschichtung, die jeweils in einer gegenständlichen Dosiervorrichtung bevorratet ist, sequentiell abgefüllt werden. Hierbei ist es nicht erforderlich, den Behälter in den die Produktschichtung abgefüllt wird, zu bewegen (für den Fall, dass nicht mehr als vier Komponenten geschichtet werden sollen).

Die zuvor in dieser Beschreibung beschriebenen beispielhaften Ausgestaltungen sollen auch in allen Kombinationen miteinander offenbart verstanden werden. Insbesondere sollen beispielhafte Ausgestaltungen in Bezug auf die unterschiedlichen Aspekten offenbart verstanden werden.

Weitere vorteilhafte beispielhafte Ausgestaltungen sind der folgenden detaillierten Beschreibung einiger beispielhafter Ausführungsformen, insbesondere in Verbindung mit den Figuren, zu entnehmen. Die Figuren sollen jedoch nur dem Zwecke der Verdeutlichung, nicht aber zur Bestimmung des Schutzbereiches dienen. Die Figuren sind nicht maßstabsgetreu und sollen lediglich das allgemeine Konzept beispielhaft widerspiegeln. Insbesondere sollen Merkmale, die in den Figuren enthalten sind, keineswegs als notwendiger Bestandteil erachtet werden.

### Kurze Beschreibung der Figuren

Nachfolgend wird die Erfindung anhand einer mehrere Ausführungsbeispiele darstellenden Zeichnung näher erläutert. Es zeigen:
- Fig. 1: eine schematische Ansicht einer beispielhaften Ausgestaltung einer gegenständlichen Dosiervorrichtung;
- Fig. 2: die Dosiervorrichtung nach Fig. 1 in einer Draufsicht;
- Fig. 3: eine schematische Draufsicht einer beispielhaften Ausgestaltung eines gegenständlichen Systems umfassend vier gegenständliche Dosiervorrichtungen;
- Fig. 4: eine schematische Draufsicht einer weiteren beispielhaften Ausgestaltung eines gegenständlichen Systems, ferner umfassend eine Extruder-Beschickung;
- Fig. 5: eine schematische Schnittdarstellung des gegenständlichen Systems der Fig. 3 entlang der Schnittlinie B-B; und
- Fig. 6: eine ausschnittsweise Darstellung der Dosiervorrichtung nach Fig. 1.

### Detaillierte Beschreibung einiger beispielhafter Ausführungsformen

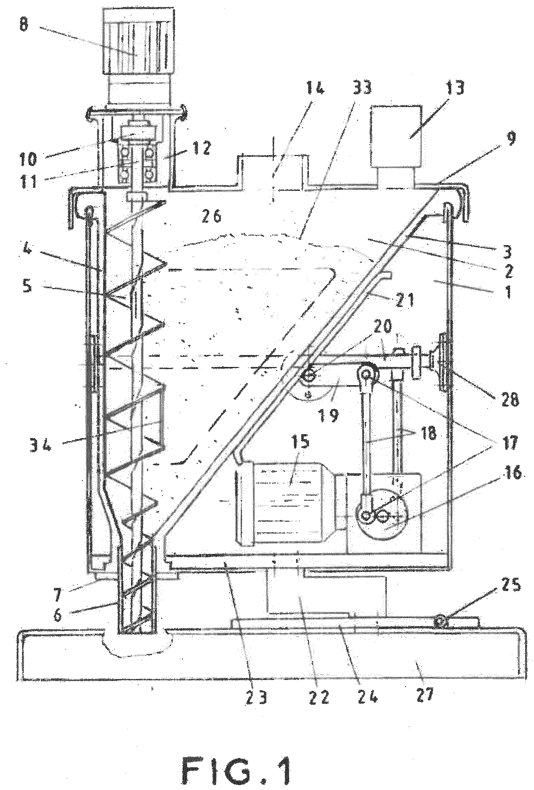

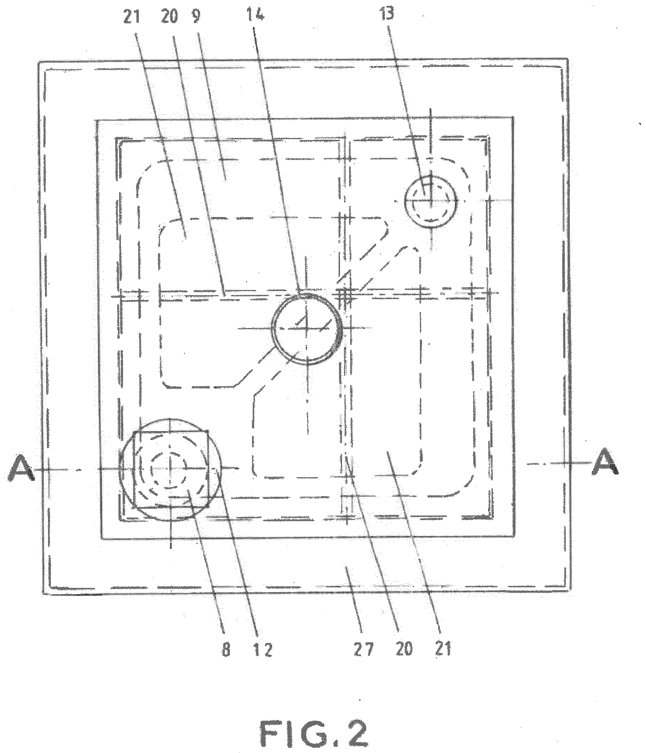

Fig. 1 zeigt eine schematische Ansicht einer beispielhaften Ausgestaltung einer gegenständlichen Dosiervorrichtung. Die in Fig. 1 gezeigte Seitenansicht zeigt einen Schnitt entlang der Schnittlinie A-A nach Fig. 2 der gegenständlichen Dosiervorrichtung.

Die Dosiervorrichtung umfasst ein Gehäuse 1, in dem ein asymmetrisch geformtes und elastisches Behältnis 2 eingesteckt bzw. eingelassen ist. Ein oberer Rand des Gehäuses 1 fixiert das eingelassene Behältnis 2 in seiner Position. Die Dosiervorrichtung weist eine rechteckige Grundform auf.

Die Schnecke 5 ist in einer Ecke des Behältnisses angeordnet. In der Seitenansicht der Fig. 1 ist zu erkennen, dass die Schnecke 5 im oberen Bereich, der von der Auslassöffnung bzw. dem Rohr 6 des Behältnisses 2 abgewandt ist, einen größeren Durchmesser aufweist. Nach unten zu der Auslassöffnung bzw. dem Rohr 6 des Behältnisses 2 hin verjüngt sich der Durchmesser der Schnecke 5, bis hinein in den Übergang der Auslassöffnung bzw. dem Rohr 6 des Behältnisses 2. Im oberen Bereich der Schnecke 5 ist eine Strebe 34 angeordnet. Die Strebe 34 befindet sich zwischen Flanken der Schnecke 5.

An der Unterseite des Gehäuses 1 ragt das Rohr 6 als Auslassöffnung hervor. Das Rohr 6 ist mittels eines Flansches 7 befestigt. Der obere Teil des Rohrs 6 ist z. B. in einen dafür vorgesehenen Verbindungsansatz des Behältnisses 2 eingeführt.

Zur Förderung bzw. zum dosierten Ausgeben des Schüttguts 33, erfolgt eine gesteuerte und/oder geregelte Ausgabe einer vorgegebenen Menge Schüttgut aus der Auslassöffnung bzw. dem Rohr 6 des Behältnisses 2. Die Schnecke 5 ist durch einen steuer- und/oder regelbaren Motor 8 angetrieben. Der Motor 8 ist auf dem Deckel 9 angeordnet. Der Deckel 9 fixiert (zusätzlich) das Behältnis 2 in dem Gehäuse 1 der gegenständlichen Dosiervorrichtung.

Ferner umfasst ist eine Kupplung 10, die vorliegend zweiteilig ausgebildet ist. Der Motor 8 erzeugt eine Drehbewegung, die über die Kupplung 10 auf die ebenfalls umfasste Antriebswelle 11 übertragen wird. Die Antriebswelle 11 wiederrum ist mit der Schnecke 5 verbunden, so dass die Schnecke in eine Rotationsbewegung versetzbar ist. Der Motor 8, sowie die Kupplung 10 sind mittels einer Lagerglocke 12 auf dem Deckel 9 der Dosiervorrichtung lösbar befestigt, so dass die Schnecke 5 in vertikaler Richtung nach oben aus dem Behältnis 2 herausziehbar ist. Der Deckel 9 kann hierbei an der Dosiervorrichtung verbleiben. Ferner ist ein Filter 13 zur Be- und Entlüftung des Behältnisses 2 umfasst. Eine Öffnung bzw. ein Einlassstutzen 14 durch den Schüttgut 33 in das Behältnis 2 einbringbar ist, ist von der Dosiervorrichtung ferner umfasst.

Im Behältnis 2 ist Schüttgut 33 zum Abfüllen bevorratet. Das Schüttgut 33 kann ferner z. B. in Abhängigkeit vom Füllstand des Behältnisses 2 in diesen (z. B. wieder) nachgefüllt werden.

Die Schnecke 5 wird mit dem Schüttgut 33 von oben befüllt wird, so dass die Schnecke 5 insbesondere nicht in einem unteren Bereich der Schnecke 5 seitlich Schüttgut aufgreift, obwohl beispielsweise in einem unteren Bereich Kontakt der Schnecke 5 mit abzufüllendem Schüttgut bestehen kann.

Fig. 2 zeigt die Dosiervorrichtung nach Fig. 1 in einer Draufsicht. Die Schnecke 5 ist in einer Ecke, die zwischen den zwei vertikal verlaufenden Seitenwände 4 ausgebildet ist angeordnet. Somit befindet sich die Schnecke 5 insbesondere nicht in der Mitte eines bekannten rotationssymmetrischen Behältnisses.

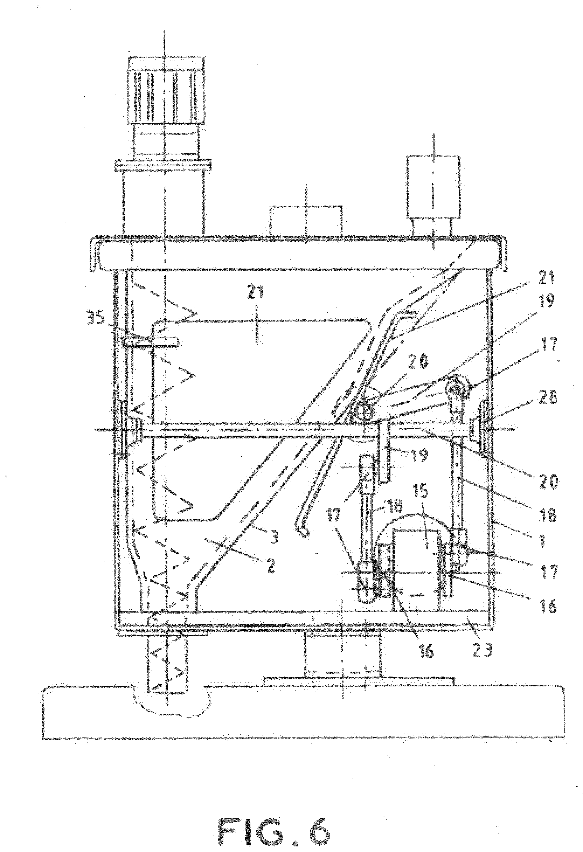

Ferner verjüngt sich der Innenraum des Behältnisses 2. Hierzu umfasst das Behältnis 2 ferner zwei weitere, schräg verlaufende Seitenwände 3, die mit den zwei vertikal verlaufenden Seitenwänden 4 verbunden sind. Dies ermöglicht eine gleichmäßige Füllung der Schnecke 5 mit Schüttgut 33. Beispielsweise ein Anbacken von Schüttgut 33 insbesondere an den schräg verlaufenden Seitenwänden 3 kann gegenständlich wirksam vermeidbar. Hierzu umfasst die gegenständliche Dosiervorrichtung Aktivierungsmittel in Form von Paddeln 21 (siehe auch Fig. 6). Die Paddel 21 wirken mechanisch jeweils auf die nach außen gerichtete Wandung der schräg verlaufenden Seitenwände 3 ein. Hierdurch erfolgt eine elastische Verformung zumindest der zwei schräg verlaufenden Seitenwände des Behältnisses 2. Die Paddel 21 üben abwechselnd im oberen und unteren Bereich der schräg verlaufenden Seitenwände 3 eine nach innen in das Behältnis 2 hinein wirkende Kraft aus. Die schräg verlaufenden Seitenwände 3 wölben sich nach innen in das Behältnis hinein.

Bei Bedarf können ferner die vertikal verlaufenden Seitenwände 4 durch Abgreifen einer Bewegung der Aktivierungsmittel (z. B. Paddel 21) aktivierbar sein.

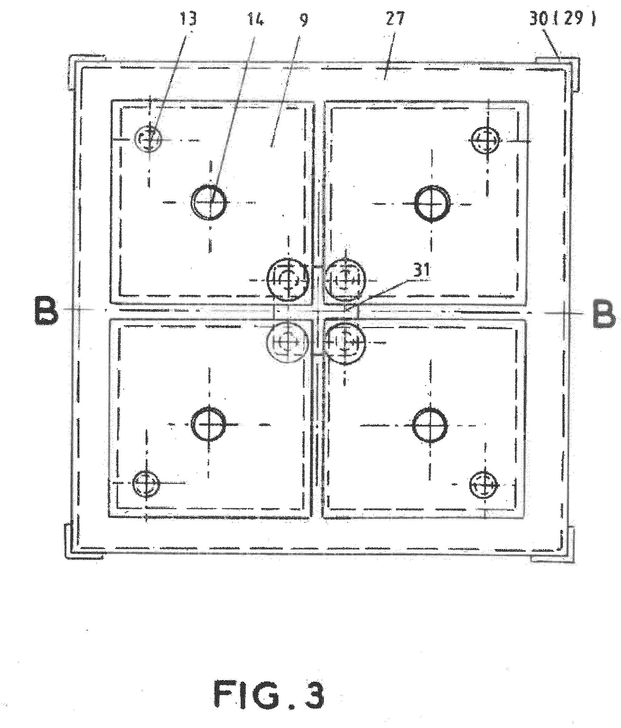

Die Anordnung der Schnecke 5 in einer derartigen Ecke des Behältnisses 2 erweist sich insbesondere als vorteilhaft, wenn mehrere (d.h. mindestens zwei) gegenständliche Dosiervorrichtungen um eine zentrale Aufnahmestelle 31 für abzufüllendes Schüttgut herum angeordnet sind (siehe auch Fig. 3).

Fig. 3 zeigt eine schematische Draufsicht einer beispielhaften Ausgestaltung eines gegenständlichen Systems umfassend vier gegenständliche Dosiervorrichtungen. Die vier Dosiervorrichtungen bilden als jeweilige Komponenten eine Anordnung aus. Es ist zu erkennen, dass die vier Dosiervorrichtungen um die zentrale Aufnahmestelle 31 für ein abzufüllendes Produkt herum angeordnet sind.

Die zentrale Aufnahmestelle 31 verfügt über eine oder mehrere Einbauten, die bewirken, dass die an einer Rezeptur des abzufüllenden Produkts beteiligten Schüttgüter 33 im Durchlaufverfahren mischbar sind. Hierbei bleibt das Mischungsverhältnis konstant. Die separaten Schüttgüter 33 sind jeweils in einer der vier gegenständlichen Dosiervorrichtungen bevorratet.

An einem oberen Rand der zentralen Aufnahmestelle 31 ist ein flexibler Kompensator 32 angeordnet. Der flexible Kompensator 32 ragt in das Rohr 6 hinein. Ferner ist der flexible Kompensator wägetechnisch entkoppelt, so dass die Wägezelle nur das Gewicht des abgefüllten Schüttguts erfasst (z. B. misst).

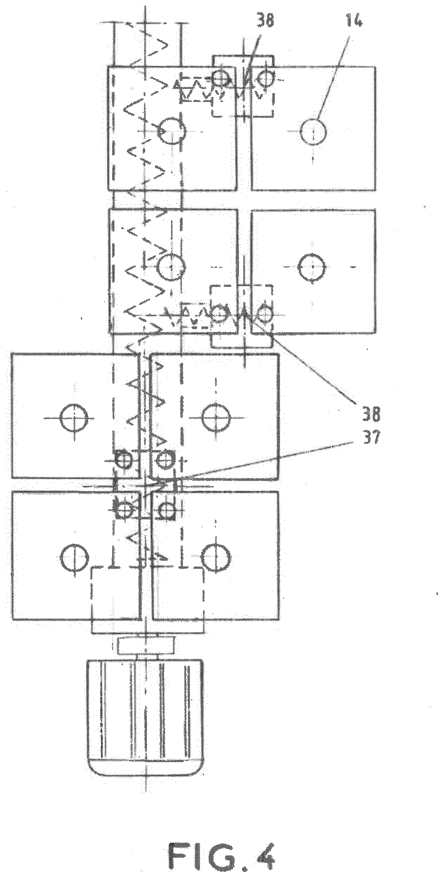

Fig.4 zeigt eine schematische Draufsicht einer weiteren beispielhaften Ausgestaltung eines gegenständlichen Systems, ferner umfassend eine Extruder-Beschickung, wie sie beispielsweise bei einer Herstellung von Kunststoff-Granulat zum Einsatz kommen kann. Das System umfasst eine erste aus vier gegenständlichen Dosiervorrichtungen gebildete Anordnung, die um einen Haupteinlauf 37 des Extruders herum angeordnet sind. Ferner sind über den weiteren Verlauf des Extruders zwei weitere Anordnungen umfassend jeweils zwei gegenständliche Dosiervorrichtungen angeordnet, deren jeweilige zentrale Aufnahmestelle 38 in Fig. 4 gezeigt ist. Ferner sind Einlaufstutzen 14 bzw. Öffnungen zum Befüllen der jeweiligen Dosiervorrichtungen mit Schüttgut zu erkennen.

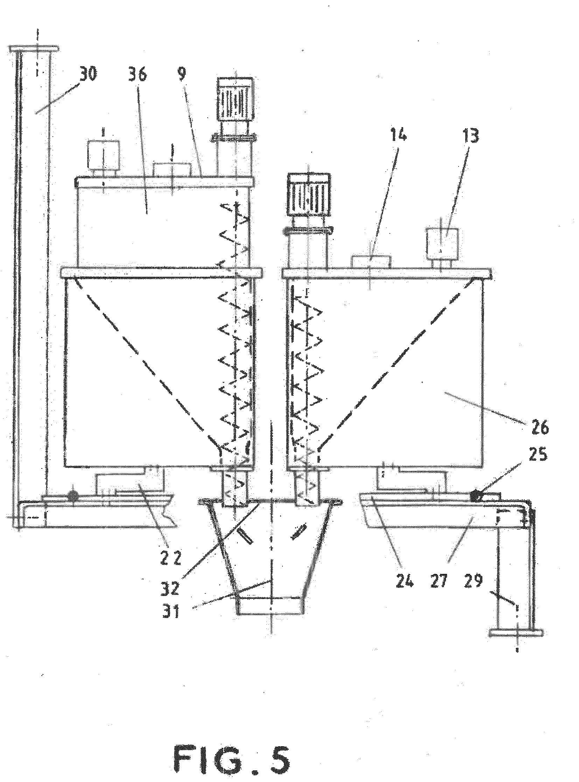

Fig. 5 zeigt eine schematische Schnittdarstellung eines gegenständlichen Systems entlang der Schnittlinie B-B nach Fig. 3. Die gezeigte Dosiervorrichtung umfasst einen Aufsatzbehälter 36. Abzufüllendes Volumen der Dosiervorrichtung kann durch die Verwendung eines derartigen Aufsatzbehältnisses 36 vergrößert werden.

Ein Tragrahmen 27, von dem z. B. eine Wägezelle 22 in Fig. 5 der vom Betrachter aus gesehen rechts dargestellten Dosiervorrichtung getragen ist, und eine Fußplatte 24 sind über ein Scharnier 25 miteinander verbunden. Dies ermöglicht es, die Dosiervorrichtung bzw. die Anordnung mehrerer gegenständlicher Dosiervorrichtungen in eine leicht zugängliche Position zu schwenken, z. B. zur Durchführung von Reinigungs- und/oder Wartungsarbeiten. Der Tragrahmen 27 ist ferner mit Stützen 29 versehen, so dass die entsprechende Dosiervorrichtung vorliegend auf einer Bühne angeordnet (z. B. abgestellt) ist. Alternativ kann die Dosiervorrichtung beispielsweise unter Verwendung von Verbindungsprofilen 30 unter einer Bühne abgehangen sein, wie dies in Fig. 5 bei der vom Betrachter aus links dargestellten Dosiervorrichtung der Fall ist.

Die jeweiligen Schnecken 5 der Dosiervorrichtungen können beispielsweise gleichzeitig starten und stoppen, so dass insbesondere Dosiervorrichtungen, die von einer derartigen Anordnung umfasst, sind synchron betreibbar sind.

Zur Herstellung einer Schichtung im abzufüllenden Gefäß können die mehreren Dosiervorrichtungen einer Anordnung (z. B. umfasst von einem gegenständlichen System) nacheinander die gewünschte Menge an abzufüllendem Schüttgut (z. B. eine Komponente des abzufüllenden Produkts) abfüllen bzw. dosiert Fördern.

Die gegenständliche Lösung ermöglicht insbesondere eine Mehrfachanordnung von mindestens zwei gegenständlichen Dosiervorrichtungen. Eine derartige Mehrfachanordnung umfasst daher mehrere (d.h. mindestens zwei) gegenständliche Dosiervorrichtungen. Dies erlaubt eine einfache Abfüllung von Schichten aus unterschiedlichem Schüttgut. Jeweils eine gegenständliche Dosiervorrichtung bevorratet zu dessen Dosierung ein bestimmtes Schüttgut. Beispielsweise kann derart farbiges Granulat geschichtet werden (z. B. von oben nach unten: rot, grün, blau, gelbes Granulat, um nur ein nicht-limitierendes Beispiel zu nennen). Hierzu muss ein Behälter, in den das Produkt abzufüllen ist, nicht aufwendig von einer rotes Granulat abfüllenden Anlage zu einer grünes Granulat abfüllenden Anlage mechanisch bewegt werden, um nur ein nicht-limitierendes Beispiel zu nennen.

Fig. 6 zeigt eine ausschnittsweise Darstellung der Dosiervorrichtung nach Fig. 1. Fig. 6 veranschaulicht eine beispielhafte Arbeitsweise der Aktivierungsmittel der Dosiervorrichtung, die vorliegend insbesondere auf die zwei schräg verlaufenden Seitenwände 3 einwirken.

Die Aktivierungsmittel werden durch einen Getriebemotor 15 angetrieben. An beiden Seiten der Getriebewelle sind vorliegend sich drehende Exzenterscheiben 16 angeordnet, wobei jede der Exzenterscheiben 16 über einen Anlenkpunkt an einem Gelenkkopf 17 angeordnet (z. B. befestigt) ist. Der Gelenkkopf 17 ist vorliegend mit einer Kurbelstange 18 operativ verbunden, welche wiederrum eine Schwingwelle 20 antreibt. Hierdurch sind die Aktivierungsmittel in eine Schwingbewegung versetzbar. Die Anlenkpunkte der Exzenterscheiben 16 können derart zueinander angeordnet sein, dass die Aktivierungsmittel für jede der zwei schräg verlaufenden Seitenwände 3 alternierend bzw. gegenläufig betrieben sind, um nur ein nicht-limitierendes Beispiel zu nennen.

Eine Lagerung 28 der Schwingwelle(n) 20 kann beispielsweise am Gehäuse 1 der Dosiervorrichtung angeordnet (z. B. befestigt) sein.

Der Getriebemotor 15 treibt die Aktivierungsmittel bzw. die Paddel 21 an. Der Getriebemotor 15 ist auf einer Platte 23 angeordnet (z. B. fixiert). Die Platte 23 ist mit dem Gehäuse 1, insbesondere dem unteren Rand des Gehäuses 1 der Dosiervorrichtung verbunden. Unterhalb der Platte 23 ist eine Wägezelle 22 angeordnet. Die Platte 23 ist an der Wägezelle 22 fixiert (z. B. mit dieser verschraubt, um nur ein nicht-limitierendes Beispiel zu nennen).

Zur besseren Lastverteilung umfasst die Wägezelle 22 eine Fußplatte 24 bzw. ist mit dieser versehen. Die Wägezelle 22 erfasst (z. B. misst) ein im Behältnis 2 befindliches Gewicht des Schüttguts 33. Ferner erfasst die Wägezelle 22 ein Taragewicht der Gesamtanordnung des gegenständlichen Systems.

Die von einer derartigen Mehrfach Anordnung umfassten gegenständlichen Dosiervorrichtungen kooperieren miteinander. Ferner sind die von einer derartigen Mehrfach-Anordnung umfassten gegenständlichen Dosiervorrichtungen platzsparend anordenbar. Horizontal verlaufende Schnecken sich bei zu hoher Drehgeschwindigkeit nicht mehr richtig füllen, ist gemäß der gegenständlichen Dosiervorrichtungen die Verwendung von vertikal verlaufenden Schnecken vorgesehen. Derartige vertikal verlaufende Schnecken können ferner gegenüber horizontal verlaufenden Schnecken mit einer höheren Umdrehungszahl bzw. - geschwindigkeit von bis zu etwa 600 U/min (im Gegensatz zu etwa 200 U/min horizontal verlaufenden Schnecken) betrieben werden.

Insbesondere kann eine pulsierende Förderung, die die Dosierung der Abfüllung von Schüttgut schwierig macht, wirksam reduziert bzw. vermieden werden.

Durch ein zumindest teilweise elastisch verformbares Behältnis (insbesondere zwei schräg verlaufende Seitenwänden des Behältnisses), sowie den optionalen Einsatz von Aktivierungsmitteln kann abzufüllendes Schüttgut kontinuierlich der Schnecke zugeführt werden.

Die in dieser Spezifikation beschriebenen Ausführungsbeispiele der vorliegenden Erfindung und die diesbezüglich jeweils angeführten optionalen Merkmale und Eigenschaften sollen auch in allen Kombinationen miteinander offenbart verstanden werden. Insbesondere soll auch die Beschreibung eines von einem Ausführungsbeispiel umfassten Merkmals - sofern nicht explizit gegenteilig erklärt - vorliegend nicht so verstanden werden, dass das Merkmal für die Funktion des Ausführungsbeispiels unerlässlich oder wesentlich ist.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Die Verwendung des unbestimmten Artikels schließt eine Mehrzahl nicht aus. Eine einzelne Vorrichtung kann die Funktionen mehrerer in den Patentansprüchen genannten Einheiten bzw. Vorrichtungen ausführen. In den Patentansprüchen angegebene Bezugszeichen sind nicht als Beschränkungen der eingesetzten Mittel und Schritte anzusehen.

### Bezugszeichenliste

- 1: Gehäuse
- 2: Behältnis
- 3: schräg verlaufende Seitenwand
- 4: vertikal verlaufende Seitenwand
- 5: Schnecke
- 6: Rohr
- 7: Flansch
- 8: Motor
- 9: Deckel
- 10: Kupplung
- 11: Antriebswelle
- 12: Lagerglocke
- 13: Filter
- 14: Einlaufstutzen
- 15: Getriebemotor
- 16: Exzenterscheibe
- 17: Gelenkkopf
- 18: Kurbelstange
- 19: Kurbellasche
- 20: Schwingwelle
- 21: Paddel
- 22: Wägezelle
- 23: Platte
- 24: Fußplatte
- 25: Scharnier
- 26: Dosiervorrichtung-Baugruppe
- 27: Tragrahmen
- 28: Lager
- 29: Stützen
- 30: Verbindungprofil
- 31: Aufnahmestelle
- 32: Kompensator
- 33: Schüttgut
- 34: Strebe
- 35: Verbindungselement
- 36: Aufsatzbehälter
- 37: Haupteinlauf Extruder
- 38: Einlauf Extruderseitenschnecke

## Patentansprüche

1. Dosiervorrichtung, umfassend:
- eine Schnecke (5) zum dosierten Fördern von Schüttgut (33);
- ein Behältnis (2), welches das Schüttgut (33) bevorratet, wobei das Behältnis (2) aus einem elastischen Material besteht und wobei im Bereich einer unteren Ecke des Behältnisses (2) eine Auslassöffnung zum dosierten Ausgeben des Schüttguts (33) angeordnet ist,
- wobei die Schnecke (5) derart angeordnet ist, dass diese ein dosiertes Fördern im Wesentlichen in vertikaler Richtung zu der Auslassöffnung hin durchführt,
- wobei das Schüttgut (33) zur dosierten Förderung durch eine mechanische Verformung des Behältnisses (2) aktivierbar und der Schnecke (5) zuführbar ist; **dadurch gekennzeichnet, dass**
- das Behältnis (2) eine rechteckige Grundform aufweist, wobei sich das Behältnis (2) zu einer Ecke der Grundform hin verjüngt; und die Dosiervorrichtung ferner umfassend:
- ein oder mehrere Aktivierungsmittel (21), die derart auf das Behältnis (2) mechanisch einwirken, dass das Behältnis (2) zumindest teilweise elastisch verformt ist, so dass das Schüttgut (33) innerhalb des Behältnisses (2) aktivierbar ist, wobei das eine oder die mehreren Aktivierungsmittel (21) paddelförmig ausgebildet sind, wobei das eine oder die mehreren Aktivierungsmittel (21) auf das Behältnis (2) von außen mechanisch einwirken.

2. Dosiervorrichtung nach Anspruch 1,
- wobei das eine oder die mehreren Aktivierungsmittel (21) ferner als Schwingungserreger ausgebildet sind, die das Behältnis (2) in Schwingung versetzen, so dass das Schüttgut (33) aktiviert ist.

3. Dosiervorrichtung nach einem der vorhergehenden Ansprüche, wobei mindestens zwei Seitenwände (4) des Behältnisses (2) im Wesentlichen vertikal verlaufend und einen Winkel zueinander ausbildend angeordnet sind, und wobei mindestens zwei weitere und zu den mindestens zwei vertikal verlaufenden Seitenwänden (3) schräg verlaufende Seitenwände von dem Behältnis (2) umfasst sind, so dass eine trichterartige Form von dem Behältnis (2) ausgebildet ist, wobei die untere Ecke im Bereich des ausgebildeten Winkels angeordnet ist.

4. Dosiervorrichtung nach Anspruch 3, wobei zumindest die zwei schräg verlaufenden Seitenwände (3) den elastisch verformbaren Teil des Behältnisses (2) ausbilden.

5. Dosiervorrichtung nach einem der vorhergehenden Ansprüche, wobei das Behältnis (2) an seinem oberen Ende zumindest eine verschließbare Öffnung zur Befüllung des Behältnisses (2) mit dem Schüttgut (33) aufweist.

6. Dosiervorrichtung nach einem der vorhergehenden Ansprüche, wobei die Schnecke (5) mit einer variablen Umdrehungszahl von 0 U/min bis zu etwa 600 U/min betreibbar ist, so dass eine Förderleistung der Schnecke (5) veränderbar ist.

7. Dosiervorrichtung nach einem der vorhergehenden Ansprüche, wobei die Schnecke (5) im oberen und der Auslassöffnung des Behältnisses (2) abgewandten Bereich der Schnecke (5) einen größeren Durchmesser aufweist als in dem der Auslassöffnung des Behältnisses (2) zugewandten Bereich der Schnecke (5).

8. Dosiervorrichtung nach einem der Ansprüche 3 bis 7, wobei die Ecke an einer inneren Wandung der zwei vertikal verlaufenden Seitenwände (4) einen Eckradius aufweist, der einem Radius der Schnecke (5), der im Bereich der Auslassöffnung des Behältnisses (2) angeordnet ist, im Wesentlichen entspricht.

9. System, umfassend:
- mehrere Dosiervorrichtungen nach einem der Ansprüche 1 bis 8.

10. System nach Anspruch 9, wobei die mehreren Dosiervorrichtungen derart zueinander angeordnet sind, dass deren jeweilige Auslassöffnungen um eine zentrale Aufnahmestelle (31, 37, 38) herum angeordnet sind.

11. System nach Anspruch 9 oder Anspruch 10, ferner umfassend:
- mindestens eine Wägezelle (22) zur Erfassung eines Gewichtssignals, wobei die jeweiligen Schnecken (5) der mehreren Dosiervorrichtungen zumindest teilweise basierend auf dem erfassten Gewichtssignal steuer- und/oder regelbar sind.

12. System nach Anspruch 10 oder Anspruch 11, wobei die zentrale Aufnahmestelle (31, 37, 38) als Durchlaufmischer ausgebildet ist, so dass eine Produktmischung ermöglicht ist.

## Claims

1. A dosing device comprising:
- a screw conveyor (5) for dosed conveying of bulk material (33);
- a container (2) which stores the bulk material (33), the container (2) consisting of an elastic material and wherein an outlet opening being arranged in the region of a lower corner of the container (2) for the dosed discharge of the bulk material (33),
- wherein the screw conveyor (5) is arranged to perform dosed conveying substantially in a vertical direction towards the outlet opening,
- wherein the bulk material (33) can be activated for dosed conveying by a mechanical deformation of the container (2) and can be fed to the screw conveyor (5);
**characterized in that**
- the container (2) has a rectangular base shape, the container (2) tapering towards a corner of the base shape; and the dosing device further comprises:
- one or more activating means (21) which act mechanically on the container (2) in such a way that the container (2) is at least partially elastically deformed, so that the bulk material (33) is activatable inside the container (2), the one or more activating means (21) being paddle-shaped, wherein the one or more activating means (21) acting mechanically on the container (2) from the outside.

2. The dosing device according to claim 1,
- wherein the one or more activating means (21) are further configured as vibration exciters that vibrate the container (2) so that the bulk material (33) is activated.

3. The dosing device according to one of the preceding claims, wherein at least two side walls (4) of the container (2) are arranged extending substantially vertically and forming an angle to each other, and wherein at least two further side walls extending obliquely to the at least two vertically extending side walls (3) are comprised by the container (2), so that a funnel-like shape is formed by the container (2), wherein the lower corner is arranged in the region of the formed angle.

4. The dosing device according to claim 3, wherein at least the two obliquely extending side walls (3) form the elastically deformable part of the container (2).

5. The dosing device according to any one of the preceding claims, wherein the container (2) has at least one closable opening at its upper end for filling the container (2) with the bulk material (33).

6. The dosing device according to any one of the preceding claims, wherein the screw conveyor (5) is operable with a variable number of revolutions from 0 rpm up to about 600 rpm, so that a conveying capacity of the screw conveyor (5) is variable.

7. The dosing device according to one of the preceding claims, wherein the screw conveyor (5) has a larger diameter in the upper region of the screw conveyor (5) facing away from the outlet opening of the container (2) than in the region of the screw conveyor (5) facing the outlet opening of the container (2).

8. The dosing device according to any one of claims 3 to 7, wherein the corner on an inner wall of the two vertically extending side walls (4) has a corner radius substantially corresponding to a radius of the screw conveyor (5) located in the area of the outlet opening of the container (2).

9. A system, comprising:
- a plurality of dosing devices according to any one of claims 1 to 8.

10. The system of claim 9, wherein the plurality of dosing devices are arranged relative to each other such that their respective outlet openings are arranged around a central receiving location (31, 37, 38).

11. The system of claim 9 or claim 10, further comprising:
- at least one load cell (22) for detecting a weight signal, wherein the respective screw conveyors (5) of the plurality of dosing devices are controllable and/or adjustable based at least in part on the detected weight signal.

12. The system according to claim 10 or claim 11, wherein the central receiving location (31, 37, 38) is designed as a continuous mixer so that product mixing is enabled.

## Revendications

1. Dispositif de dosage, comprenant :
- une vis sans fin (5) pour le transport dosé de produits en vrac (33) ;
- un récipient (2) qui stocke le produit en vrac (33), le récipient (2) étant constitué d'un matériau élastique et une ouverture de sortie pour la distribution dosée du produit en vrac (33) étant disposée dans la zone d'un coin inférieur du récipient (2),
- dans lequel la vis sans fin (5) est disposée de telle sorte qu'elle effectue un transport dosé sensiblement dans la direction verticale vers l'ouverture de sortie,
- dans lequel le produit en vrac (33) peut être activé pour le transport dosé par une déformation mécanique du récipient (2) et peut être amené à la vis sans fin (5) ; **caractérisé en ce que**
- le récipient (2) présente une forme de base rectangulaire, le récipient (2) se rétrécissant vers un coin de la forme de base ; et le dispositif de dosage comprenant en outre :
- un ou plusieurs moyens d'activation (21) qui agissent mécaniquement sur le récipient (2) de telle sorte que le récipient (2) est au moins partiellement déformé élastiquement, de sorte que le produit en vrac (33) peut être activé à l'intérieur du récipient (2), l'un ou les plusieurs moyens d'activation (21) étant réalisés en forme de palettes, l'un ou les plusieurs moyens d'activation (21) agissant mécaniquement sur le récipient (2) depuis l'extérieur.

2. Dispositif de dosage selon la revendication 1,
- dans lequel l'un ou les plusieurs moyens d'activation (21) sont en outre réalisés sous forme de générateurs de vibrations qui font vibrer le récipient (2), de sorte que le produit en vrac (33) est activé.

3. Dispositif de dosage selon l'une quelconque des revendications précédentes, dans lequel au moins deux parois latérales (4) du récipient (2) sont disposées de manière à s'étendre sensiblement verticalement et à former un angle l'une par rapport à l'autre, et dans lequel au moins deux autres parois latérales s'étendant obliquement par rapport aux au moins deux parois latérales (3) s'étendant verticalement sont comprises par le récipient (2), de sorte qu'une forme en entonnoir est formée par le récipient (2), le coin inférieur étant disposé dans la zone de l'angle formé.

4. Dispositif de dosage selon la revendication 3, dans lequel au moins les deux parois latérales (3) s'étendant obliquement forment la partie élastiquement déformable du récipient (2).

5. Dispositif de dosage selon l'une quelconque des revendications précédentes, dans lequel le récipient (2) présente à son extrémité supérieure au moins une ouverture pouvant être fermée pour le remplissage du récipient (2) avec le produit en vrac (33).

6. Dispositif de dosage selon l'une quelconque des revendications précédentes, dans lequel la vis sans fin (5) peut être actionnée à une vitesse de rotation variable de 0 tr/min à environ 600 tr/min, de sorte qu'un débit de la vis sans fin (5) peut être modifié.

7. Dispositif de dosage selon l'une quelconque des revendications précédentes, dans lequel la vis sans fin (5) présente un diamètre plus grand dans la zone de la vis sans fin (5) supérieure et opposée à l'ouverture de sortie du récipient (2) que dans la zone de la vis sans fin (5) tournée vers l'ouverture de sortie du récipient (2).

8. Dispositif de dosage selon l'une quelconque des revendications 3 à 7, dans lequel le coin présente, sur une paroi interne des deux parois latérales (4) s'étendant verticalement, un rayon de coin correspondant sensiblement à un rayon de la vis sans fin (5) situé dans la zone de l'ouverture de sortie du récipient (2).

9. Système, comprenant :
- plusieurs dispositifs de dosage selon l'une quelconque des revendications 1 à 8.

10. Système selon la revendication 9, dans lequel les plusieurs dispositifs de dosage sont disposés les uns par rapport aux autres de telle sorte que leurs ouvertures de sortie respectives sont disposées autour d'un emplacement de réception central (31, 37, 38).

11. Système selon la revendication 9 ou la revendication 10, comprenant en outre :
- au moins une cellule de pesage (22) pour détecter un signal de poids, les vis sans fin respectives (5) des plusieurs dispositifs de dosage pouvant être commandées et/ou réglées au moins partiellement sur la base du signal de poids détecté.

12. Système selon la revendication 10 ou la revendication 11, dans lequel l'emplacement de réception central (31, 37, 38) est conçu comme un mélangeur continu, de sorte qu'un mélange de produits est possible.
